# FASCICULE DE BREVET EUROPEEN

(11) **EP 3 985 299 B1**
(45) Date de publication et mention de la délivrance du brevet: **07.06.2023**
(21) Numéro de dépôt: 21198406.7
(22) Date de dépôt: 23.09.2021
(51) Int. Cl.: F17C 5/06

(54) **DISPOSITIF ET PROCÉDÉ DE REMPLISSAGE DE RÉSERVOIRS DE GAZ SOUS PRESSION**
FÜLLVORRICHTUNG UND -VERFAHREN FÜR UNTER DRUCK STEHENDE GASTANKS
DEVICE AND METHOD FOR FILLING PRESSURISED GAS TANKS

(30) Priorité: 16.10.2020 FR 2010622
(43) Date de publication de la demande: 20.04.2022
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: WERLEN, Etienne, 38360 SASSENAGE (FR); DEVILLIERS, Clemence, 38360 SASSENAGE (FR)
(74) Mandataire: Air Liquide

(56) Documents cités:
- EP-A1- 3 249 281
- WO-A1-2009/013415
- FR-A1- 2 960 041
- FR-A1- 2 973 858
- FR-A1- 3 091 572
- US-A1- 2019 041 003

## Description

L'invention concerne un dispositif et un procédé de remplissage de réservoirs de gaz sous pression.

Un tel dispositif est connu de WO2009/013415 A1.

L'invention concerne plus particulièrement un dispositif de remplissage de réservoirs de gaz sous pression, notamment de réservoirs d'hydrogène gazeux de véhicules automobiles, le dispositif comprenant au moins une source de gaz, un circuit de transfert comprenant au moins une extrémité amont reliée à la source et au moins une extrémité aval de distribution destinée être raccordée de façon amovible avec un réservoir à remplir, le dispositif comprenant un ensemble de stockage(s) tampon(s) raccordé(s) en parallèle au circuit de transfert entre les extrémités amont et aval via un ensemble de vanne(s) de raccordement respectives, le circuit de transfert comprenant en outre au moins un compresseur, le compresseur comportant une entrée d'admission reliée à l'extrémité amont du circuit via au moins une vanne amont, le compresseur comprenant une sortie de refoulement reliée au(x) stockage(s) tampon via un ensemble de vanne(s) de refoulement.

Une telle station de remplissage est typiquement équipée d'un ensemble de réservoirs tampon stationnaires (« buffers » en anglais) qui sont remplis par la source (généralement transportable et typiquement un semi-remorque portant des stockages à haute pression de grande dimensions) et/ou à l'aide d'un ou plusieurs compresseurs.

Lorsque la source est à plus haute pression qu'un des stockage tampon, il n'est pas possible ou pas souhaitable de transférer du gaz depuis la source vers le stockage tampon au travers du compresseur. En effet, appliquer à l'aspiration d'un compresseur une pression plus élevée qu'au refoulement risque d'ouvrir les clapets du compresseur et provoquer un battement des clapets qui les endommage rapidement. De plus, il y a un risque de transfert trop rapide et de vitesses trop élevées dans les tuyauteries.

L'optimisation de l'usage d'un compresseur volumétrique pour la performance de la station conduit à utiliser certains stockage tampon à l'aspiration du compresseur lorsque la source est basse en pression. Avec ce type de fonctionnement, on observe que, lorsque la source arrive en fin d'utilisation, la pression de certains stockage tampon est relativement basse. Après l'échange (plein contre vide) de la source on peut se retrouver dans une situation où la source est à plus haute pression que certains stockage tampon. Ceci interdit l'usage de ces stockages tampon jusqu'à ce que la source ait suffisamment baissé en pression pour permettre le transfert vers ces stockages tampon au travers du compresseur. Ceci est particulièrement le cas avec des sources à haute pression (300 bar, 450 bar ou 650 bar ou plus).

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que le circuit comprend des conduites d'équilibrage reliant la au moins une extrémité amont du circuit au(x) stockage(s) tampon, lesdites conduites d'équilibrage comprenant un organe de limitation de débit et étant configurées pour permettre le transfert d'un flux de fluide de la source vers le(s) stockage(s) tampon par équilibrage de pression.

Ainsi, en installant des orifices calibrés ou équivalent (c'est à dire un élément créant une restriction au passage du fluide pour en limiter le débit, par exemple, un tube de petit diamètre, une vanne à pointeau de régulation) et éventuellement des vannes de contrôle, l'invention permet le transfert de gaz depuis la source vers les stockages tampon de façon sécurisée. Ainsi, le transfert au travers du compresseur peut être évité lorsque le différentiel de pression est inadapté.

Le circuit est équipé de préférence de clapet(s) anti-retour. Les vannes du circuit peuvent être contrôlées pour piloter le débit au travers de ces organes de limitation de débit pour effectuer le transfert d'hydrogène vers un stockage tampon lorsque la pression dans la source est relativement plus haute. Ainsi, l'usage du compresseur peut être interdit et évité pour remplir les stockages tampon lorsque la pression à l'aspiration est plus élevée qu'au refoulement.

Par ailleurs, des modes de réalisation de l'invention peuvent comporter l'une ou plusieurs des caractéristiques suivantes :
- l'entrée d'admission du compresseur est reliée également aux(x) stockage(s) tampon via un ensemble de vanne(s) d'admission,
- les conduites d'équilibrage comprennent des portions distinctes d'au moins une partie du circuit reliant l'entrée d'admission du compresseur aux stockages tampon via l'ensemble de vanne(s) d'admission,
- les conduites d'équilibrage comprennent chacune une vanne d'isolation et/ou un clapet anti-retour en série avec l'organe de limitation de débit,
- la source comprend au moins l'un parmi : un ou plusieurs stockages de gaz sous pression, notamment des stockages mobiles, un réseau de gaz sous pression, un stockage de gaz liquéfié associé à un réchauffeur et/ou une pompe, un électrolyseur,
- le dispositif comprend plusieurs stockages tampon raccordés en parallèle à la au moins une extrémité amont via des conduites d'équilibrage respectives et des organes de limitation de débit respectifs,
- les stockages tampon sont raccordés en parallèle à la au moins une extrémité aval via des conduites aval respectives et les vanne(s) de raccordement respectives,
- l'entrée d'admission du compresseur est reliée à chacun des stockages tampon via des conduites d'aspiration distinctes comprenant chacune une vanne d'admission,
- le circuit comprend plusieurs extrémités aval de distribution distinctes,
- le circuit comprend plusieurs extrémités amont raccordées en parallèle à la source et un ensemble de vanne(s) pilotée(s) configurée (s) pour sélectionner la ou les sources de de gaz alimentant le circuit de transfert.

L'invention concerne également un procédé de remplissage de réservoir(s) de gaz sous pression, notamment de réservoirs d'hydrogène gazeux de véhicules automobiles, utilisant un dispositif selon l'une quelconque des caractéristiques ci-dessus ou ci-dessous, le procédé comportant une étape de transfert de gaz sous pression de la source vers un stockage tampon à remplir par équilibrage de pression via une conduites d'équilibrage et un organe de limitation de débit.

Selon une particularité possible, le procédé comporte une étape comparaison de la pression de la source et de la pression du stockage tampon à remplir et, lorsque la pression de la source est supérieure à la pression du stockage tampon à remplir d'une valeur déterminée, le transfert de gaz sous pression de la source vers le stockage tampon à remplir est réalisé par équilibrage de pression via une conduites d'équilibrage et un organe de limitation de débit et, lorsque la pression de la source est inférieure à la pression du stockage tampon à remplir avec une tolérance de pression déterminée, de préférence inférieure à 10 MPa, le transfert de gaz sous pression de la source vers le stockage tampon à remplir est réalisé via le compresseur. L'invention peut concerner également tout dispositif ou procédé alternatif comprenant toute combinaison des caractéristiques ci-dessus ou ci-dessous dans le cadre des revendications. D'autres particularités et avantages apparaîtront à la lecture de la description ci-après, faite en référence aux figures dans lesquelles :

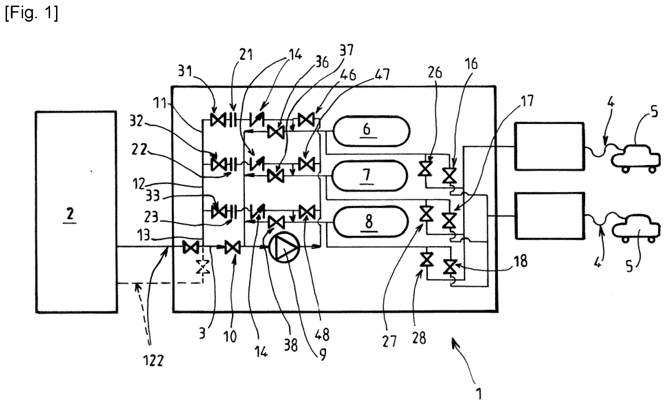

[Fig. 1] représente une vue schématique et partielle illustrant un exemple de structure et de fonctionnement d'un dispositif selon l'invention.

Le dispositif 1 de remplissage de réservoirs de gaz sous pression illustré est par exemple une station de remplissage de réservoirs d'hydrogène gazeux de véhicules automobiles.

Le dispositif 1 comprend au moins une source 2 de gaz et un circuit 3 de transfert comprenant au moins une extrémité amont 122 reliée à la source 2 et au moins une extrémité aval 4 de distribution destinée être raccordée de façon amovible avec un réservoir 5 à remplir (par exemple via un tuyau flexible muni d'une buse).

La source 2 comprend typiquement un ou plusieurs stockages de gaz sous pression, notamment des stockages mobiles (montés sur semi-remorque par exemple). Bien entendu tout autre type de source peut être envisagé (réseau de gaz sous pression, un stockage de gaz liquéfié associé à un réchauffeur et/ou une pompe, un électrolyseur...) .

De plus, plusieurs sources 2 peuvent être prévues et peuvent être raccordées en parallèle à l'extrémité 122 amont ou à plusieurs extrémités amont 122 distinctes du circuit de transfert. Le dispositif 1 étant configuré de préférence pour sélectionner le gaz de remplissage entre plusieurs sources connectées en parallèle.

Par exemple, plusieurs stockages mobiles (" trailers") ou plusieurs compartiments d'un même stockage mobile peuvent être reliés à l'aspiration du compresseur ou être utilisées pour un transfert vers un stockage tampon via un ensemble de vanne(s) appropriée (s) .

Le dispositif 1 comprenant, un ensemble de stockages tampon 6 à 8 raccordés en parallèle au circuit 3 de transfert entre les extrémités amont et aval via un ensemble de vanne(s) 16 à 18, 26 à 28 de raccordement respectives. Dans cet exemple trois réservoirs 6, 7, 8 tampon sont représentés mais un seul, deux ou plus de trois peuvent être envisagés. De préférence, ces stockages tampons 6 à 8 sont fixes ou stationnaires.

Le circuit 3 de transfert comprenant en outre un compresseur 9 muni d'une entrée d'admission reliée à l'extrémité amont du circuit 3 via au moins une vanne 10 amont. C'est-à-dire que le compresseur 9 peut être alimenté en gaz provenant directement de la source 2.

Cette entrée d'admission du compresseur 9 peut être reliée également aux stockages tampon 6 à 8 via un ensemble de vannes d'admission 36 à 38 respectives. C'est-dire que le compresseur 2 peut être alimenté en gaz provenant des stockages tampon 6 à 8. Par exemple, l'entrée d'admission du compresseur 9 est reliée à chacun des stockages tampon 6 à 8 via des conduites d'aspiration distinctes comprenant chacune une vanne d'admission 36 à 38.

Le compresseur 9 comprenant une sortie de refoulement du gaz comprimé reliée aux stockage(s) tampon 6 à 8 via un ensemble de vanne(s) 46 à 88 respectives. C'est-à-dire que le compresseur peut remplir les stockages tampon 6 à 8.

Les stockages tampon 6 à 8 sont reliés en parallèle aux extrémités aval 4. Ceci permet par exemple de réaliser des remplissages de réservoirs 5 par équilibrage de pression (notamment selon le principe de la cascade). Par exemple, les stockages tampon 6 à 8 sont raccordés en parallèle aux extrémité aval 4 via des conduites aval respectives et des vannes 16 à 18, 26 à 28 de raccordement respectives permettant à chaque extrémité aval 4 d'être alimentée par l'un quelconque des stockages tampon (éventuellement même par plusieurs simultanément).

De même, de préférence, la sortie de refoulement du compresseur 9 peut être raccordée également aux extrémités aval 4 du circuit pour transférer du gaz sous pression directement dans les réservoirs 5 (éventuellement simultanément à un transfert par les stockages tampon 6 à 8).

Le circuit 3 comprend en outre des conduites 11, 12, 13 d'équilibrage reliant l'extrémité amont 122 du circuit 3 aux stockages tampon 6, 7, 8. Ces conduites 11, 12, 13 d'équilibrage comprennent un organe de limitation de débit 21, 22, 23 (orifice calibré ou autre) et sont configurées pour permettre le transfert d'un flux de fluide de la source 2 directement vers le ou les stockages tampon 6, 7, 8 par équilibrage de pression (sans passer par le compresseur 9).

Comme illustré, les conduites 11, 12, 13 d'équilibrage comprennent de préférence des portions distinctes d'au moins une partie du circuit 3 reliant l'entrée d'admission du compresseur 9 aux stockages tampon 6 à 8 via l'ensemble de vanne(s) d'admission. Par exemple, les conduites dédiées sont raccordées en parallèle à l'extrémité amont 122 du circuit 3.

Comme illustré, chaque conduite 11, 12, 13 d'équilibrage associée à un stockage tampon peut comporter un clapet et/ou une vanne d'isolation 31, 32, 33 respectif et/ou un clapet anti-retour 14 respectif en série avec un organe de limitation de débit respectif.

Bien entendu en variante, tout ou partie des cas organes pourraient être mutualisés dans une portion de circuit commune aux conduites 11, 12, 13 d'équilibrage.

Un tel agencement permet de remplir les stockage tampon 6 à 8 par équilibrage de pression avec la source 2 lorsque la pression de la source 2 est supérieure à celle dudit stockage tampon à remplir. Lorsque la pression la source 2 est égale ou proche de celle du stockage tampon à remplir, le transfert et remplissage peut être poursuivi en utilisant un compresseur 9.

Ainsi, le remplissage des stockage tampon 6 à 8 peut utiliser une conduite 11, 12, 13 d'équilibrage dédiée lorsque la pression dans une source 2 transportable est supérieure à celle du stockage tampon concerné et utiliser un transfert au travers du compresseur 9 lorsque la pression dans une source 2 transportable est proche ou inférieure à celle du stockage tampon 6 à 8.

Par exemple, le transfert est réalisé via le compresseur 9 lorsque la pression de la source 2 est inférieure à la pression du stockage tampon à remplir avec une tolérance de pression déterminée, de préférence inférieure à 10 MPa (100 bar), par exemple inférieure ou égale à 1 MPa (10 bar). C'est à dire que le compresseur 9 peut être utilisé pour un transfert entre la source 2 et le stockage tampon si, par exemple la source est à 30 MPa (300bar) et le buffer à une pression de plus de 29 MPa (290bar) .

La présence d'un organe de limitation de débit 21, 22, 23 dans les conduites 11, 12, 13 d'équilibrage empêche les montées en pression trop brutales. La présence d'un clapet anti-retour dans les conduites 11, 12, 13 d'équilibrage est un mode de réalisation préféré qui permet d'éviter un retour de fluide vers le compresseur 9.

Tout ou partie de ces transferts peuvent être automatisés, par exemple via l'utilisation de vannes pilotées.

Si nécessaire pour diverses optimisations, cette logique peut être combinée à d'autres critères pour contrôler les transferts de gaz dans la station.

Cette architecture et utilisation permet de remplir des stockages tampon de façon sécurisée, par exemple pendant un mode de non utilisation du dispositif (pas de remplissage d'un réservoir 5) et/ou pendant un remplissage d'un réservoir 5 le cas échéant. Les stockages tampon ainsi remplis peuvent être utilisés pour transférer du gaz sous pression lors d'un remplissage de réservoir 5.

## Revendications

1. Dispositif de remplissage de réservoirs de gaz sous pression, notamment de réservoirs d'hydrogène gazeux de véhicules automobiles, le dispositif (1) comprenant au moins une source (2) de gaz, un circuit (3) de transfert comprenant au moins une extrémité amont (122) reliée à la source (2) et au moins une extrémité aval (4) de distribution destinée être raccordée de façon amovible avec un réservoir (5) à remplir, le dispositif (1) comprenant un ensemble de stockage(s) tampon(s) (6 à 8) raccordé (s) en parallèle au circuit (3) de transfert entre les extrémités amont et aval via un ensemble de vanne(s) (16 à 18, 26 à 28) de raccordement respectives, le circuit (3) de transfert comprenant en outre au moins un compresseur (9), le compresseur (9) comportant une entrée d'admission reliée à l'extrémité amont du circuit (3) via au moins une vanne (10) amont, le compresseur (9) comprenant une sortie de refoulement reliée au(x) stockage(s) tampon (6 à 8) via un ensemble de vanne (s) (46 à 88) de refoulement, le dispositif (1) étant tel que le circuit (3) comprend des conduites (11, 12, 13) d'équilibrage reliant la au moins une extrémité amont (122) du circuit (3) au(x) stockage(s) tampon (6, 7, 8), lesdites conduites (11, 12, 13) d'équilibrage étant configurées pour permettre le transfert d'un flux de fluide de la source (2) vers le(s) stockage(s) tampon (6, 7, 8) par équilibrage de pression, 1
le dispositif étant **caractérisé en ce que** lesdites conduites (11,12,13) d'équilibrage comprennent un organe de limitation de débit (21,22,23).

2. Dispositif selon la revendication 1, **caractérisé en ce que** l'entrée d'admission du compresseur est reliée également aux(x) stockage(s) tampon (6 à 8) via un ensemble de vanne(s) d'admission (36 à 38).

3. Dispositif selon la revendication 2, **caractérisé en ce que** les conduites (11, 12, 13) d'équilibrage comprennent des portions distinctes d'au moins une partie du circuit (3) reliant l'entrée d'admission du compresseur (9) aux stockages tampon (6 à 8) via l'ensemble de vanne(s) d'admission (36 à 38).

4. Dispositif selon l'une quelconque des revendications 1 à 3, **caractérisé en ce que** les conduites (11, 12, 13) d'équilibrage comprennent chacune une vanne d'isolation (31, 32, 33) et/ou un clapet anti-retour (14) en série avec l'organe de limitation de débit (21, 22, 23).

5. Dispositif selon l'une quelconque des revendications 1 à 4, **caractérisé en ce que** la source (2) comprend au moins l'un parmi : un ou plusieurs stockages de gaz sous pression, notamment des stockages mobiles, un réseau de gaz sous pression, un stockage de gaz liquéfié associé à un réchauffeur et/ou une pompe, un électrolyseur.

6. Dispositif selon l'une quelconque des revendications 1 à 5, **caractérisé en ce qu'**il comprend plusieurs stockages tampon (6 à 8) raccordés en parallèle à la au moins une extrémité amont (122) via des conduites (11, 12, 13) d'équilibrage respectives et des organes de limitation de débit (21, 22, 23) respectifs.

7. Dispositif selon la revendication 6, **caractérisé en ce que** les stockages tampon (6 à 8) sont raccordés en parallèle à la au moins une extrémité aval (4) via des conduites aval respectives et les vanne(s) (16 à 18, 26 à 28) de raccordement respectives.

8. Dispositif selon l'une quelconque des revendications 6 ou 7, **caractérisé en ce que** l'entrée d'admission du compresseur (9) est reliée à chacun des stockages tampon (6 à 8) via des conduites d'aspiration distinctes comprenant chacune une vanne d'admission (36 à 38) .

9. Dispositif selon l'une quelconque des revendications 1 à 8, **caractérisé en ce que** le circuit (3) comprend plusieurs extrémités aval (4) de distribution distinctes.

10. Dispositif selon l'une quelconque des revendications 1 à 9, **caractérisé en ce que** le circuit (3) comprend plusieurs extrémité amont (122) raccordées en parallèle à la source (2) et un ensemble de vanne(s) pilotée(s) configurée(s) pour sélectionner la ou les sources (2) de de gaz alimentant le circuit (3) de transfert.

11. Procédé de remplissage de réservoir (s) (5) de gaz sous pression, notamment de réservoirs d'hydrogène gazeux de véhicules automobiles, utilisant un dispositif selon l'une quelconque des revendications précédentes, le procédé comportant une étape de transfert de gaz sous pression de la source (2) vers un stockage tampon (6, 7, 8) à remplir par équilibrage de pression via une conduites (11, 12, 13) d'équilibrage et un organe de limitation de débit (21, 22, 23) et /ou via le compresseur (9).

12. Procédé selon la revendication 11, caractérisé en qu'il comporte une étape comparaison de la pression de la source (2) et de la pression du stockage tampon (6, 7, 8) à remplir et, lorsque la pression de la source (2) est supérieure à la pression du stockage tampon (6, 7, 8) à remplir d'une valeur déterminée, le transfert de gaz sous pression de la source (2) vers le stockage tampon (6, 7, 8) à remplir est réalisé par équilibrage de pression via une conduites (11, 12, 13) d'équilibrage et un organe de limitation de débit (21, 22, 23) et, lorsque la pression de la source (2) est inférieure à la pression du stockage tampon à remplir avec une tolérance de pression déterminée, de préférence inférieure à 10 MPa, le transfert de gaz sous pression de la source (2) vers le stockage tampon (6, 7, 8) à remplir est réalisé via le compresseur (9).

## Patentansprüche

1. Vorrichtung zum Füllen von Druckgastanks, insbesondere von Wasserstoffgastanks von Kraftfahrzeugen, wobei die Vorrichtung (1) mindestens eine Gasquelle (2) umfasst, sowie einen Übertragungskreis (3), der mindestens ein mit der Quelle (2) verbundenes stromaufwärtiges Ende (122) und mindestens ein stromabwärtiges Abgabeende (4), das dazu bestimmt ist, lösbar an einen zu füllenden Tank (5) angeschlossen zu werden, umfasst, wobei die Vorrichtung (1) eine Anordnung eines Pufferspeichers (von Pufferspeichern) (6 bis 8) umfasst, der (die) zu dem Übertragungskreis (3) zwischen dem stromaufwärtigen und dem stromabwärtigen Ende über eine Anordnung eines (von) jeweiligen Anschlussventils (Anschlussventilen) (16 bis 18, 26 bis 28) parallelgeschaltet ist (sind), wobei der Übertragungskreis (3) außerdem mindestens einen Kompressor (9) umfasst, wobei der Kompressor (9) einen Einlass aufweist, der mit dem stromaufwärtigen Ende des Kreises (3) über mindestens ein stromaufwärtiges Ventil (10) verbunden ist, wobei der Kompressor (9) einen Druckausgang umfasst, der mit dem (den) Pufferspeicher(n) (6 bis 8) über eine Anordnung eines Auslassventils (von Auslassventilen) (46 bis 88) verbunden ist, wobei die Vorrichtung (1) so beschaffen ist, dass der Kreis (3) Ausgleichsleitungen (11, 12, 13) umfasst, die das mindestens eine stromaufwärtige Ende (122) des Kreises (3) mit dem (den) Pufferspeicher(n) (6, 7, 8) verbinden, wobei die Ausgleichsleitungen (11, 12, 13) dafür ausgelegt sind, die Übertragung eines Fluidstroms von der Quelle (2) zu dem (den) Pufferspeicher(n) (6, 7, 8) durch Druckausgleich zu ermöglichen,
wobei die Vorrichtung **dadurch gekennzeichnet ist, dass** die Ausgleichsleitungen (11, 12, 13) ein Durchflussbegrenzungsorgan (21, 22, 23) umfassen.

2. Vorrichtung nach Anspruch 1, **dadurch gekennzeichnet, dass** der Einlass des Kompressors ebenfalls mit dem (den) Pufferspeicher(n) (6 bis 8) über eine Anordnung eines Einlassventils (von Einlassventilen) (36 bis 38) verbunden ist.

3. Vorrichtung nach Anspruch 2, **dadurch gekennzeichnet, dass** die Ausgleichsleitungen (11, 12, 13) unterschiedliche Abschnitte wenigstens eines Teils des Kreises (3) umfassen, die den Einlass des Kompressors (9) mit den Pufferspeichern (6 bis 8) über die Anordnung eines Einlassventils (von Einlassventilen) (36 bis 38) verbinden.

4. Vorrichtung nach einem der Ansprüche 1 bis 3, **dadurch gekennzeichnet, dass** die Ausgleichsleitungen (11, 12, 13) jeweils ein Absperrventil (31, 32, 33) und/oder ein Rückschlagventil (14) umfassen, das mit dem Durchflussbegrenzungsorgan (21, 22, 23) in Reihe geschaltet ist.

5. Vorrichtung nach einem der Ansprüche 1 bis 4, **dadurch gekennzeichnet, dass** die Quelle (2) mindestens eines umfasst von: einem oder mehreren Druckgasspeichern, insbesondere mobilen Speichern, einem Druckgasnetz, einem Flüssiggasspeicher, der mit einem Vorwärmer und/oder einer Pumpe verbunden ist, einem Elektrolyseur.

6. Vorrichtung nach einem der Ansprüche 1 bis 5, **dadurch gekennzeichnet, dass** sie mehrere Pufferspeicher (6 bis 8) umfasst, die zu dem mindestens einen stromaufwärtigen Ende (122) über jeweilige Ausgleichsleitungen (11, 12, 13) und jeweilige Durchflussbegrenzungsorgane (21, 22, 23) parallelgeschaltet sind.

7. Vorrichtung nach Anspruch 6, **dadurch gekennzeichnet, dass** die Pufferspeicher (6 bis 8) zu dem mindestens einen stromabwärtigen Ende (4) über jeweilige stromabwärtige Leitungen und die jeweiligen Anschlussventile (16 bis 18, 26 bis 28) parallelgeschaltet sind.

8. Vorrichtung nach einem der Ansprüche 6 oder 7, **dadurch gekennzeichnet, dass** der Einlass des Kompressors (9) mit den einzelnen Pufferspeichern (6 bis 8) über verschiedene Saugleitungen verbunden ist, die jeweils ein Einlassventil (36 bis 38) umfassen.

9. Vorrichtung nach einem der Ansprüche 1 bis 8, **dadurch gekennzeichnet, dass** der Kreis (3) mehrere verschiedene stromabwärtige Abgabeenden (4) umfasst.

10. Vorrichtung nach einem der Ansprüche 1 bis 9, **dadurch gekennzeichnet, dass** der Kreis (3) mehrere stromaufwärtige Enden (122), die zu der Quelle (2) parallelgeschaltet sind, und eine Anordnung eines (von) vorgesteuerten Ventils (Ventilen), das (die) dafür ausgelegt ist (sind), die Quelle oder die Quellen (2) von Gas auszuwählen, die den Übertragungskreis (3) speist (speisen), umfasst.

11. Verfahren zum Füllen eines (von) Druckgastanks (5), insbesondere von Wasserstoffgastanks von Kraftfahrzeugen, bei dem eine Vorrichtung nach einem der vorhergehenden Ansprüche verwendet wird, wobei das Verfahren einen Schritt der Übertragung von Druckgas von der Quelle (2) zu einem zu füllenden Pufferspeicher (6, 7, 8) durch Druckausgleich über eine Ausgleichsleitung (11, 12, 13) und ein Durchflussbegrenzungsorgan (21, 22, 23) und/oder über den Kompressor (9) umfasst.

12. Verfahren nach Anspruch 11, **dadurch gekennzeichnet, dass** es einen Schritt des Vergleichs des Drucks der Quelle (2) und des Drucks des zu füllenden Pufferspeichers (6, 7, 8) umfasst, und wenn der Druck der Quelle (2) um einen bestimmten Wert höher als der Druck des zu füllenden Pufferspeichers (6, 7, 8) ist, die Übertragung von Druckgas von der Quelle (2) zu dem zu füllenden Pufferspeicher (6, 7, 8) durch Druckausgleich über eine Ausgleichsleitung (11, 12, 13) und ein Durchflussbegrenzungsorgan (21, 22, 23) durchgeführt wird, und wenn der Druck der Quelle (2) mit einer bestimmten Drucktoleranz, die vorzugsweise kleiner als 10 MPa ist, niedriger als der Druck des zu füllenden Pufferspeichers ist, die Übertragung von Druckgas von der Quelle (2) zu dem zu füllenden Pufferspeicher (6, 7, 8) über den Kompressor (9) durchgeführt wird.

## Claims

1. Device for filling pressurized gas tanks, in particular hydrogen gas tanks of motor vehicles, the device (1) comprising at least one gas source (2), a transfer circuit (3) comprising at least one upstream end (122) connected to the source (2) and at least one downstream distribution end (4) suitable for being removably connected to a tank (5) to be filled, the device (1) comprising a set of buffer storage container(s) (6 to 8) connected in parallel to the transfer circuit (3) between the upstream and downstream ends via a set of respective connecting valve(s) (16 to 18, 26 to 28), the transfer circuit (3) further comprising at least one compressor (9), the compressor (9) having an intake inlet connected to the upstream end of the circuit (3) via at least one upstream valve (10), the compressor (9) comprising a discharge outlet connected to the buffer storage container (s) (6 to 8) via a set of discharge valve(s) (46 to 88), the device (1) being such that the circuit (3) comprises balance lines (11, 12, 13) connecting the at least one upstream end (122) of the circuit (3) to the buffer storage container(s) (6, 7, 8), said balance lines (11, 12, 13) being configured to allow the transfer of a stream of fluid from the source (2) to the buffer storage container(s) (6, 7, 8) by pressure balancing, the device being **characterized in that** said balance lines (11, 12, 13) comprise a flow limiting member (21, 22, 23).

2. Device according to Claim 1, **characterized in that** the intake inlet of the compressor is also connected to the buffer storage container (s) (6 to 8) via a set of intake valve(s) (36 to 38).

3. Device according to Claim 2, **characterized in that** the balance lines (11, 12, 13) comprise separate portions of at least part of the circuit (3) connecting the intake inlet of the compressor (9) to the buffer storage containers (6 to 8) via the set of intake valve (s) (36 to 38).

4. Device according to any one of Claims 1 to 3, **characterized in that** the balance lines (11, 12, 13) each comprise an isolation valve (31, 32, 33) and/or a non-return valve (14) in series with the flow limiting member (21, 22, 23) .

5. Device according to any one of Claims 1 to 4, **characterized in that** the source (2) comprises at least one of: one or more pressurized gas storage containers, in particular mobile storage containers, a pressurized gas network, a liquefied gas storage container associated with a heater and/or a pump, and an electrolyser.

6. Device according to any one of Claims 1 to 5, **characterized in that** it comprises a plurality of buffer storage containers (6 to 8) connected in parallel to the at least one upstream end (122) via respective balance lines (11, 12, 13) and respective flow limiting members (21, 22, 23) .

7. Device according to Claim 6, **characterized in that** the buffer storage containers (6 to 8) are connected in parallel to the at least one downstream end (4) via respective downstream lines and the respective connecting valve(s) (16 to 18, 26 to 28) .

8. Device according to either one of Claims 6 and 7, **characterized in that** the intake inlet of the compressor (9) is connected to each of the buffer storage containers (6 to 8) via separate suction lines each comprising an intake valve (36 to 38).

9. Device according to any one of Claims 1 to 8, **characterized in that** the circuit (3) comprises a plurality of separate downstream distribution ends (4).

10. Device according to any one of Claims 1 to 9, **characterized in that** the circuit (3) comprises a plurality of upstream ends (122) connected in parallel to the source (2) and a set of controlled valve (s) configured to select the one or more gas sources (2) supplying the transfer circuit (3).

11. Method for filling pressurized gas tank(s) (5), in particular hydrogen gas tanks of motor vehicles, using a device according to any one of the preceding claims, the method including a step of transferring pressurized gas from the source (2) to a buffer storage container (6, 7, 8) to be filled by pressure balancing via a balance line (11, 12, 13) and a flow limiting member (21, 22, 23) and/or via the compressor (9).

12. Method according to Claim 11, **characterized in that** it includes a step of comparing the pressure of the source (2) and the pressure of the buffer storage container (6, 7, 8) to be filled and, when the pressure of the source (2) is higher than the pressure of the buffer storage container (6, 7, 8) to be filled by a determined value, the pressurized gas is transferred from the source (2) to the buffer storage container (6, 7, 8) to be filled by pressure balancing via a balance line (11, 12, 13) and a flow limiting member (21, 22, 23) and, when the pressure of the source (2) is lower than the pressure of the buffer storage container to be filled with a determined pressure tolerance, preferably less than 10 MPa, the pressurized gas is transferred from the source (2) to the buffer storage container (6, 7, 8) to be filled via the compressor (9).
